**Europäisches Patentamt**

**European Patent Office**

**Office européen des brevets**

(11) Publication number : **0 282 153 B1**

# EUROPEAN PATENT SPECIFICATION

(45) Date of publication of patent specification :
**18.03.92 Bulletin 92/12**

(21) Application number : **88300615.7**

(22) Date of filing : **26.01.88**

(51) Int. Cl.⁵ : **C08L 77/00, // (C08L77/00, 67:02, 51:06)**

(54) **Blends of polyamides, polyesters and maleic anhydride modified EPDM rubbers.**

(30) Priority : **12.02.87 US 13620**

(43) Date of publication of application :
**14.09.88 Bulletin 88/37**

(45) Publication of the grant of the patent :
**18.03.92 Bulletin 92/12**

(84) Designated Contracting States :
**AT BE CH DE ES FR GB GR IT LI LU NL SE**

(56) References cited :
**EP-A- 0 029 566**
**US-A- 4 174 358**
**US-A- 4 594 386**

(73) Proprietor : **HOECHST CELANESE CORPORATION**
**Route 202-206 North**
**Somerville, N.J. 08876 (US)**

(72) Inventor : **Yu, Thomas C.**
**54 Susan Drive**
**Chatham New Jersey (US)**
Inventor : **Dolce, Thomas J.**
**410 Chestnut Street**
**Stirling New Jersey (US)**

(74) Representative : **De Minvielle-Devaux, Ian Benedict Peter et al**
**CARPMAELS & RANSFORD 43, Bloomsbury Square**
**London WC1A 2RA (GB)**

## Description

The field of art to which this invention pertains is thermoplastic molding compositions made from blends of thermoplastic resins.

The blending or alloying of polymers and resins is a well known procedure for modifying and improving the properties of the individual polymers. By proper blending procedures and judicious choice of polymers, molding resins can be tailored for specific end uses.

Blends of polyamides, polyesters and polyolefins with a small amount of an elastomer are described in U.S. Patent No. 3,546,319. These blends form films which show improved tear resistance and fibers which show superior resistance to splitting.

In U.S. Patent No. 3,845,163, nylons are toughened by being blended with olefin/acid copolymers.

Blends of polyester resins with various polymers which include polyamides are described in U.S. Patent No. 4,097,446.

U.S. Patent No. 4,187,358 discloses blends of polyamides, aromatic polyesters and ionomers.

High performance rubber/polyester blends are described in U.S. Patent No. 4,558,096. The compatibilizing agents for these blends are alkenyl succinic anhydrides or polymers which contain the anhydride structure.

Automotive engineers are constantly looking for new structural materials to replace metals in various parts of automobiles, such as the interior and exterior panels. For such use, the plastic material must have excellent toughness, impact resistance and heat resistance sufficient to withstand on-line painting. It should also have good dimensional stability and low moisture absorption.

Nylon is an excellent material of construction exhibiting toughness and heat resistance. However, for some uses, the impact resistance is poor and the water absorption is too high. Polyester molding resins have desirable low water absorption properties and good impact resistance but poor heat resistance. Attempts have been made to combine nylons and polyesters in order to improve the overall properties. Injection molded articles made from binary blends of nylons with polyesters, such as polyethylene terephthalate, have a tendency to delaminate.

It is an object of this invention to provide compatible blends of nylons and polyesters.

It is a further object of this invention to provide molding resins having lower moisture absorption properties than nylon.

A still further object of this invention is to provide compatible blends of nylons and polyesters which have lower moisture absorption properties than nylon itself while still retaining sufficient toughness and strength properties to be useful in automotive structures.

This invention is directed to compatible blends of nylons and polyesters. In one aspect, this invention pertains to ternary blends of nylons, polyesters and a compatibilizing resin. In another aspect, this invention relates to nylons modified with polyesters and a compatibilizing and impact modifying resin.

The molding compositions of this invention are made from a blend of a nylon polyamide, a polyester and an EPDM rubber (a terpolymer of ethylene, propylene and a diene monomer) modified with maleic anhydride, as defined in claim 1. The compositions contain 45 to 85 parts by weight of polyamid, 5 to 25 parts by weight of polyester and 10 to 30 parts by weight of EPDM modified rubber wherein said parts total 100 parts by weight. The EPDM rubber is modified with 0.2 to 1 weight percent maleic anhydride based on the weight of the rubber. Preferred compositions contain 55 to 75 parts by weight of polyamide, 10 to 20 parts by weight of polyester and 15 to 25 parts by weight of EPDM rubber preferably, the EPDM rubber is modified with 0.4 to 0.6 percent maleic anhydride.

The molding compositions of this invention have low moisture absorptions properties and excellent heat resistance as exhibited by lack of heat sag at elevated temperatures.

The polyamides useful in this invention are of the nylon type, the use of which as molding resins and as fibers is well known. The polyamide resins are generally produced by condensing a saturated dicarboxylic acid containing from 2 to 10 carbon atoms with an alkylene diamine in which the alkylene groups contains from 2 to 10 carbon atoms. Examples of such polyamides include polyhexamethyleneadipamide (nylon 6,6), polyhexamethylene sebacamide (nylon 6,10) and the polyamide produced by the self condensation of caprolactam (nylon 6). Useful polyamides have melting points above 200°C and, preferably, above 250°C. The relative viscosities, of such polyamides particularly for nylon 6,6, as measured in 90 percent formic acid at 11 weight percent polyamide are 30 to 350, and preferably 40 to 60.

The polyesters useful in this invention are derived from an aliphatic or cycloaliphatic diol or mixtures thereof and an aromatic dicarboxylic acid. Examples of aliphatic and cycloaliphatic diols are ethylene glycol, 1,2,-propylene glycol, 1,3-propylene glycol, 1,4-butylene glycol, 1,6-hexanediol and 1,4-cyclohexanedimethanol. Examples of the aromatic dicarboxylic acids useful in making the polyesters are isophthalic acid therephthalic acid, 1,2-di(p-carboxyphenyl)ethane, 4,4'-dicarboxydiphenyl ether and 1,4,-or 1,5-naphthalene dicarboxylic acid.

The polyesters useful in this invention can also contain minor amounts, e.g., from 0.5 to 2 percent by weight of units derived from aliphatic acids and/or long chain aliphatic polyols. Examples of long chain polyols are poly(ethylene glycols) and poly(propylene glycols). Aliphatic dicarboxylic acids include adipic acid, cyclohexane diacetic acid and dimerized $C_{16}$-$C_{18}$ unsaturated acids. The preferred polyesters for use in this invention are polyethylene terephthalate and polybutylene terephthalate. Useful polyesters have melting points above 200°C and, preferably, above 250°C. The intrinsic viscosities of such polyesters, particularly polyethylene terephthalate and polybutylene terephthalate are 0.4 to 1.5 dl/g with the preferred range being 0.6 to 0.8 dl/g.

The rubber useful in this invention is an EPDM rubber which is a terpolymer of ethylene, propylene and a diene monomer. Examples of useful diene monomers are ethylidene norbornene, methylene norbornene, 1,4-hexadiene, dicyclopentadiene and isoprene. The EPDM rubbers have number average molecular weights of at least 5000. Rubbers having number average molecular weights of 10,000 to 200,000 are generally preferred. The EPDM rubbers contain 35 to 80 weight percent ethylene, 18 to 55 weight percent propylene and two to 10 weight percent diene monomer. The preferred rubbers will contain 48 to 77 weight percent ethylene and 23 to 52 weight percent propylene with the diene being 2.5 to 9.8 weight percent based on the weight of ethylene and propylene. the preferred diene for use in the EPDM rubbers for this invention is ethylidene norbornene.

The EPDM rubbers are modified with 0.2 to 1 weight percent maleic anhydride and, preferably, 0.4 to 0.6 weight percent maleic anhydride, said weight percents being based on the total weight of the rubber. The maleic anhydride may be reacted with the EPDM rubber by a melt process using the procedure described in U.S. Patent No. 4,578,429.

In preparing blended compositions of this invention, the components are blended in the amount of 45 to 85 parts by weight of polyamide, 5 to 25 parts by weight of polyester and 10 to 30 parts by weight of rubber. The preferred amounts are 55 to 75 parts by weight of polyamide, 10 to 20 parts by weight of polyester and 15 to 25 parts by weight of rubber.

The molding compositions of this invention are prepared by any conventional mixing method. For example, one method comprises mixing the polyamide, the polyester and the rubber in powder or granulated form in an extruder, extruding the mixture into strands, chopping the strands into pellets and molding the pellets into the desired article. The blending operation is conducted at a temperature above the melting point of the polyamide, generally at a temperature of 260°C to 300°C.

Additional additives which are well known to those skilled in the art can be included in with the present compositions. Such additives include plasticizers, pigments, flame retardants, reinforcing agents, thermal stabilizer and processing agents.

The following examples describe the invention in more detail. Parts and percentages, unless otherwise identified are parts and percentages by weight.

Example 1

A polyamide (nylon 6,6) (PA) having a melting point of 265°C, a polyethylene terephthalate (PET) having a melting point of 260°C, and EPDM rubber modified with 0.5 weight percent maleic anhydride were compounded on a 28 mm ZSK compounding extruder at a temperature of 240°C in Zone 1, the feed zone, at 260°C in Zone 2, at 280°C in Zones 3 and 4 and at 280°C in Zone 5, the die zone. The screw speed was 150-200 rpms at a torque of 600-800 inch pounds (67.8-90.4 Newton metres). Test specimens were injection molded using a 2 ounce Arburg at a temperature of 280°C in the feed zone, 280°C in Zones 2 and 3 and 300°C at the nozzle. The amounts of each component used in preparing the blend and the physical properties of the blended molded resins are shown in Table I.

Heat sag as shown in the table was measured by first clamping the tensile specimen in a jig with a 6 inch (152 mm) overhang. The vertical distance between the end of the freely suspended test bar and the jig platform was then measured. The jig was put inside a circulating oven at 193°C for 30 minutes. The change in vertical span between the free end of the test bar to the jig platform immediately after exposure, and 10 minutes after exposure, was recorded as initial and final sag. A heat sag of less than 15 mm is usually considered to be good.

Water absorption was determined by immersing tensile bars into boiling water for 24 hours. The percent weight change was then recorded.

Impact and ductility were determined by a Rheometric Drop Tester using 2 inch by 1/8 inch (51mm by 3.2mm) injection molding disks. The weight of the test bar was 33 pounds (14.97 kg). The dart speed upon impact was set to be 132 inches (3353 mm) per second. A sample was classified as being ductile indicated by a (D) in the table if the 7/16 inch (1.1 mm) size dart penetrated through the sample disk without shattering it. However, if the sample disk fractured upon impact, it was recorded as brittle failure indicated by a (B).

In Table I, the formulation in the last column is comparative.

Table I

Properties of Nylon/PET Blends

| | 70/10/20 PA/PET/EPDM | 65/15/20 PA/PET/EPDM | 60/20/20 PA/PET/EPDM | 100/0/0 PA/PET/EPDM |
|---|---|---|---|---|
| Tensile | | | | |
| Tensile Stress @ Break, psi | 6,107 | 6,621 | 6,282 | 9,500 |
| kPa | 42,070 | 45,610 | 43,275 | 65,445 |
| Elongation @ Break, % | 62.4 | 16.3 | 39.5 | 69.0 |
| Flexural | | | | |
| Flex Stress @ 5% Strain, kpsi | 6.4 | 7.74 | 9.80 | 17.1 |
| kPa | 44090 | 53320 | 67510 | 117800 |
| Flex Modulus, kkpsi | 0.182 | 0.215 | 0.262 | 0.420 |
| MPa | 1.254 | 1.481 | 1.805 | 2.893 |
| Thermal | | | | |
| Heat Distortion @ 264 psi, °F | 135 | 144 | 144 | 170 |
| 1818Pa °C | 57.2 | 62.2 | 62.2 | 76.7 |
| Heat Sag @ 193°C, Initial/Final, mm/mm | 7.9/6.4 | 6.7/8.7 | 11.1/8.7 | 5/5 |
| Water Absorption | | | | |
| Boiling Water 24 hrs., % | 5.21 | 5.32 | 3.24 | 7.76 |
| Impact | | | | |
| Notched Izod, 1/8", ft-lbs/in. | NB | 2.5 | 3.6 | 1.0 |
| 3.2 mm J/cm | | 1.335 | 1.922 | 0.534 |
| Rheometric Peak Force, lbs. | 743 | 705 | 782 | 1115 |
| kg | 337 | 320 | 355 | 506 |
| Energy, in-lbs. | 341 | 196 | 376 | 500 |
| Joules | 38.5 | 22.1 | 42.5 | 56.5 |
| Ductility | D | D/B | D | D |

Example 2

Using the same procedure described in Example 1 blends were made with the same polyamide and the same EPDM rubber used in Example 1. the polyester was polybutylene terephthalate (PBT) having a melting point of 228°C. The amounts of component used and the physical properties of the molded resins are found in Table II. In this Table, the formulations in the last two columns are comparative.

Example 3

Using the same procedure described in Example 1, blends were made using the same nylon, polyesters and EPDM rubber used in Example 2. the amounts of each component used in preparing the blends and the physical properties of the blended molded resins are shown in Rable III and Table IV.

Water absorption was determined according to ASTM D-570 by immersing the samples in water at room temperature (23 + 1°C) for 24 hours.

The water absorption of the unmodified molded nylon was 1.5 percent.

Ductility was determined using the Rheometric Drop Tester and the procedure described in Example 1 except the disks were cooled with liquid nitrogen to -20°C and -40°C. The temperature listed in the tables indicates the temperature at which the sample passed the ductility test, i.e., allowing the dart to penetrate without shattering.

Table II

Properties of Nylon/PBT Blends

| | 70/10/20 PA/PBT/EPDM | 65/15/20 PA/PET/EPDM | 60/20/20 PA/PET/EPDM | 100/0/0 PA | 0/100/0 PA/PET/EPDM |
|---|---|---|---|---|---|
| **Tensile** | | | | | |
| Tensile Stress @ Break, psi | 6,227 | 5,748 | 5,891 | 9,500 | 4,542 |
| kPa | 42,900 | 39,600 | 40,580 | 65,445 | 31,290 |
| Elongation @ Break, % | 40.8 | 48.9 | 38.5 | 60.0 | 138 |
| **Flexural** | | | | | |
| Flex Stress @ 5% Strain, kpsi | 6.95 | 6.53 | 6.80 | 17.1 | 12.4 |
| kPa | 47,880 | 44,985 | 46,845 | 117,800 | 85,425 |
| Flex Modulus, kkpsi | 0.194 | 0.182 | 0.195 | 0.420 | 0.376 |
| MPa | 1.336 | 1.254 | 1.343 | 2.893 | 2.590 |
| **Thermal** | | | | | |
| Heat Distortion @ 264 psi, °F | 136 | 133 | 133 | 170 | |
| 1818 Pa °C | 57.8 | 56.1 | 56.1 | 76.7 | |
| Heat Sag @ 193°C, Initial/Final, mm/mm | 11.9/12.7 | 7.9/7.1 | 7.1/6.4 | 5/5 | |
| **Water Absorption** | | | | | |
| Boiling Water 24 hrs., % | 4.81 | 4.42 | 4.42 | 7.76 | |
| **Impact** | | | | | |
| Notched Izod, 1/8", ft-lbs/in. | NB | 14.0 | 12.3 | 1.0 | |
| 3.2mm J/cm | | 7.476 | 6.568 | 0.534 | |
| Rheometric Peak Force, lbs. | 767 | 720 | 731 | 1115 | |
| kg | 348 | 327 | 332 | 506 | |
| Energy, in-lbs. | 368 | 344 | 324 | 500 | |
| Joules | 41.6 | 38.9 | 36.6 | 56.5 | |
| Ductility | D | D | D | D | |

## Table III

### Properties of Nylon/PBT Blends

| | 50/20/30 PA/PBT/EPDM | 50/30/20 PA/PBT/EPDM | 60/10/30 PA/PBT/EPDM | 70/10/20 PA/PBT/EPDM |
|---|---|---|---|---|
| **Tensile Stress** | | | | |
| @ Yield, psi | 5,220 | 7,200 | 5,800 | 8,000 |
| kPa | 35,960 | 49,600 | 39,955 | 55,110 |
| **Tensile Street** | | | | |
| @ Break, psi | 5,000 | 6,700 | 5,800 | 7,100 |
| kPa | 34,445 | 46,155 | 39,955 | 48,910 |
| **Elongation** | | | | |
| @ Break % | 44 | 24 | 99 | 26 |
| **Flexural Stress** | | | | |
| @ 5% Strain, psi | 6,700 | 9,400 | 7,600 | 10,800 |
| kPa | 46,155 | 64,755 | 52,355 | 74,400 |
| **Flexural Modulus** | | | | |
| psi x $10^5$ | 1.89 | 2.57 | 2.19 | 2.88 |
| MPa | 1.302 | 1.770 | 1.509 | 1.984 |
| **Heat Distortion** | | | | |
| @ 264 psi, °F | 131 | 144 | 138 | 147 |
| 1818 Pa, °C | 55 | 62.2 | 58.9 | 63.9 |
| **Initial/Final** | | | | |
| mm/mm | 15.3/16/5 | 9.8/11.5 | 11.0/15.5 | 9.3/10.0 |
| **Water** | | | | |
| Absorption % | 0.44 | 0.30 | 0.54 | 0.68 |
| **Impact** | | | | |
| **Notched Izod, ft-lbs/in** | | | | |
| RT | NB | NB | NB | NB |
| -40°c | 1.60 | 1.74 | 2.81 | 1.06 |
| J/cm | 0.854 | 0.929 | 1.500 | 0.566 |
| **Rheometric** | | | | |
| Peak Force, lbs | 563 | 719 | 642 | 610 |
| Kg | 256 | 326 | 291 | 277 |
| Energy, in-lbs | 233 | 340 | 312 | 195 |
| Joules | 26.3 | 38.4 | 35.3 | 22.0 |
| Ductility °C | -20 | -40 | -20 | -20 |

## Table IV

## Properties of Nylon/PET Blends

70/10/20
PA/PET/EPDM

| | |
|---|---|
| Tensile Stress @ Yield, psi | 6,100 |
| kPa | 42,025 |
| Tensile Stress @ Break, psi | 6,100 |
| kPa | 42,025 |
| Elongation @ Break % | 62. |
| Flexural Stress @ 5% Strain, psi | 6,400 |
| kPa | 44,090 |
| Flexural Modulus $psi \times 10^5$ | 1.82 |
| MPa | 1.254 |
| Heat Distortion @ 264 psi, °F | 135 |
| 1818 Pa, °C | 57.2 |
| Heat Sag @ 193°C Initial/Final mm/mm | 7.9/16.4 |

Impact

| | |
|---|---|
| Notched Izod (ft. lb/in) RT | NB |
| | 2.81 |
| J/cm | 1.500 |
| Rheometric Peak Force, lbs | 743 |
| kg | 337 |
| Energy, in-lbs | 341 |
| Joules | 38.5 |
| Ductility °C | -20 |

The principles, preferred embodiments and modes of operation of the present invention have been described in the foregoing specification. The invention which is intended to be protected herein, however, is not to be construed as limited to the particular forms disclosed, since these are to be regarded as illustrating rather than restrictive. Variations and changes may be made by those skilled in the art without departing from the spirit of the invention.

## Claims

1. A molding composition comprising a blend of:
a) a polyamide
b) a polyester and
c) a maleic anhydride modified EPDM rubber,
wherein the polyamide is a condensation polymer of an aliphatic dicarboxylic acid containing 2 to 10 carbon atoms and an alkylene diamine in which the alkylene groups contain 2 to 10 carbon atoms, the polyester is a condensation polymer of an aliphatic or cycloaliphatic diol or mixtures thereof and an aromatic dicarboxylic acid, and the maleic anhydride modified EPDM rubber has a number average molecular weight of at least 5000 and is a terpolymer of 35 to 80 weight percent ethylene, 18 to 55 weight percent propylene and 2 to 10 weight percent diene monomer, modified with 0.2 to 1 weight percent maleic anhydride, based on the total weight of the EPDM rubber,
wherein (a), (b) and (c) are present in the blend in the amount of 45 to 85 weight percent polyamide, 5 to 25 weight percent polyester and 10 to 30 weight percent maleic anhydride modified EPDM rubber, said weight percents being based on the total weight of (a), (b) and (c).

2. The composition of Claim 1 wherein the polyamide is present in the amount of 55 to 75 weight percent, the polyester is present in the amount of 10 to 20 weight percent and the EPDM modified rubber is present in the amount of 15 to 25 weight percent.

3. The composition of Claim 1 wherein the EPDM rubber is modified with 0.4 to 0.6 weight percent maleic anhydride.

4. The composition of Claim 1 wherein the diene monomer is ethylidene norbornene.

5. The composition of Claim 1 wherein the polyamide is polyhexamethylene adipamide.

6. The composition of Claim 1 wherein the polyester is polyethylene terephthalate.

7. The composition of Claim 1 wherein the polyester is polybutylene terephthalate.

8. The composition of Claim 7 wherein the EPDM rubber contains 48 to 77 weight percent ethylene, 23 to 52 weight percent propylene and 2.5 to 9.8 weight percent diene monomer.

9. The composition of Claim 8 wherein the diene monomer is ethylidene norborene.

## Patentansprüche

1. Formmasse, umfassend ein Gemisch aus
(a) einem Polyamid,
(b) einem Polyester und
(c) einem mit Maleinsäureanhydrid modifizierten EPDM-Kautschuk,
worin das Polyamid ein Kondensations-Polymer einer 2 bis 10 Kohlenstoff-Atome enthaltenden aliphatischen Dicarbonsäure und eines Alkylendiamins ist, in dem die Alkylen-Gruppen 2 bis 10 Kohlenstoff-Atome enthalten, der Polyester ein Kondensations-Polymer eines aliphatischen oder cycloaliphatischen Diols oder von Mischungen derselben und einer aromatischen Dicarbonsäure ist und der mit Maleinsäureanhydrid modifizierte EPDM-Kautschuk ein Zahlenmittel des Molekulargewichts von wenigstens 5000 hat und ein Terpolymer aus 35 bis 80 Gew.-% Ethylen, 18 bis 55 Gew.-% propylen und 2 bis 10 Gew.-% Dien-Monomer ist, das mit 0,2 bis 1 Gew.-% Maleinsäureanhydrid, bezogen auf das Gesamtgewicht des EPDM-Kautschuks, modifiziert ist,
worin (a), (b) und (c) in dem Gemisch in einer Menge von 45 bis 85 Gew.-% Polyamid, 5 bis 25 Gew.-% Polyester und 10 bis 30 Gew.-% mit Maleinsäureanhydrid modifiziertem EPDM-Kautschuk vorliegen, wobei diese Gew.-% auf das Gesamt-Gewicht von (a), (b) und (c) bezogen sind.

2. Zusammensetzung nach Anspruch 1, worin das Polyamid in einer Menge von 55 bis 75 Gew.-% vorliegt, der Polyester in einer Menge von 10 bis 20 Gew.-% vorliegt und der mit Maleinsäureanhydrid modifizierte EPDM-Kautschuk in einer Menge von 15 bis 25 Gew.-% vorliegt.

3. Zusammensetzung nach Anspruch 1, worin der EPDM-Kautschuk mit 0,4 bis 0,6 Gew.-% Maleinsäureanhydrid modifiziert ist.

4. Zusammensetzung nach Anspruch 1, worin das Dien-Monomer Ethylidennorbornen ist.

5. Zusammensetzung nach Anspruch 1, worin das Polyamid Polyhexamethylenadipamid ist.

6. Zusammensetzung nach Anspruch 1, worin der Polyester Polyethylenterephthalat ist.

7. Zusammensetzung nach Anspruch 1, worin der Polyester Polybutylenterephthalat ist.

8. Zusammensetzung nach Anspruch 1, worin der EPDM-Kautschuk 48 bis 77 Gew.-% Ethylen, 23 bis 52 Gew.-% Propylen und 2,5 bis 9,8 Gew.-% Dien-Monomer enthält.

9. Zusammensetzung nach Anspruch 8, worin das Dien-Monomer Ethylidennorbornen ist.

**Revendications**

1. Composition de moulage comprenant un mélange de :
a) un polyamide
b) un polyester et
c) un caoutchouc EPDM modifié par un anhydride maléique,
où le polyamide est un polymère de condensation d'un acide dicarboxylique aliphatique contenant 2 à 10 atomes de carbone et d'une alcoylène diamine dans laquelle les groupes alcoylènes contiennent 2 à 10 atomes de carbone, le polyester est un polymère de condensation d'un diol aliphatique ou cycloaliphatique ou leurs mélanges et d'un acide dicarboxylique aromatique et le caoutchouc EPDM modifié par un anhydride maléique a un poids moléculaire moyen en nombre d'au moins 5.000 et est un terpolymère de 35 à 80 pour cent en poids d'éthylène, 18 à 55 pour cent en poids de propylène et 2 à 10 pour cent en poids du monomère diène, modifié par 0,2 à 1 pour cent en poids d'anhydrique maléique en se basant sur le poids total du caoutchouc EPDM,
où (a), (b) et (c) sont présents dans le mélange à la quantité de 45 à 85 pour cent en poids de polyamide, 5 à 25 pour cent en poids du polyester et 10 à 30 pour cent en poids de caoutchouc EPDM modifié par l'anhydride maléique, lesdits pourcentages pondéraux étant basés sur le poids total de (a), (b) et (c).

2. Composition de la revendication 1, où le polyamide est présent à la quantité de 55 à 75 pour cent en poids, le polyester est présent à la quantité de 10 à 20 pour cent et le caoutchouc EPDM modifié est présent à la quantité de 15 à 25 pour cent en poids.

3. Composition selon la revendication 1, où le caoutchouc EPDM est modifié par 0,4 à 0,6 pour cent en poids d'anhydride maléique.

4. Composition de la revendication 1, où le monomère diène est éthylidène norbornène.

5. Composition de la revendication 1, où le polyamide est polyhexaméthylène adipamide.

6. Composition de la revendication 1, où le polyester est polyéthylène téréphtalate.

7. Composition de la revendication 1, où le polyester est polybutylène téréphtalate.

8. Composition de la revendication 7, où le caoutchouc EPDM contient 48 à 77 pour cent en poids d'éthylène, 23 à 52 pour cent en poids de propylène et 2,5 à 9,8 pour cent en poids du monomère diène.

9. Composition de la revendication 8, où le monomère diène est éthylidène norbornène.